(19) Europäisches Patentamt
European Patent Office
Office européen des brevets

(11) Veröffentlichungsnummer: **0 391 031**
**A2**

(12) # EUROPÄISCHE PATENTANMELDUNG

(21) Anmeldenummer: **90101745.9**

(22) Anmeldetag: **29.01.90**

(51) Int. Cl.5: **C08G 65/44, C08G 67/00, C08G 77/00, C08G 65/48**

(30) Priorität: **04.04.89 DE 3910832**

(43) Veröffentlichungstag der Anmeldung:
**10.10.90 Patentblatt 90/41**

(84) Benannte Vertragsstaaten:
**AT BE DE FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Kowalczik, Udo, Dr.**
**Camillo-Sitte-Weg 4**
**D-4630 Bochum 1(DE)**
Erfinder: **Bartmann, Martin, Dr.**
**Burgstrasse 35**
**D-4350 Recklinghausen(DE)**
Erfinder: **Poll, Günter, Dr.**
**Venusweg 9**
**D-4370 Marl(DE)**

(54) **Blockcopolymere auf Basis von Polyphenylenethern und Polykondensaten sowie Verfahren zu ihrer Herstellung.**

(57)

2.1 Aufgabe der Erfindung war die Entwicklung einer einfachen Synthese neuer Polyphenylenether-Polykondensat-Blockcopolymerer.

2.2 Die Aufgabe wurde durch ein Verfahren gelöst, das aus folgenden Schritten besteht:
- man stellt durch oxidative Kupplung eines Gemisches aus 90,0 - 99,8 Mol-% eines substituierten Phenols und 10,0 -0,2 Mol-% eines funktionalisierten Phenols einen Polyphenylenether mit einer funktionellen Endgruppe her;
- anschließend führt man in Gegenwart dieses funktionalisierten Polyphenylenethers eine Polykondensation geeigneter Monomerer durch.

2.3 Die erfindungsgemäßen Blockcopolymere können für sich alleine oder als Zusatz für thermoplastische Formmassen verwendet werden.

EP 0 391 031 A2

# Blockcopolymere auf Basis von Polyphenylenethern und Polykondensaten sowie Verfahren zu ihrer Herstellung

Die vorliegende Erfindung beschreibt neuartige Polyphenylenether-Polykondensat-Blockcopolymere sowie ihre Herstellung aus substituierten Phenolen und bestimmten polykondensationsfähigen Monomeren.

Polyphenylenether-Polykondensat-Blockcopolymere sind im Prinzip bekannt. Die DE-OS 15 20 019 beschreibt die Herstellung von Blockcopolymeren aus Polyphenylenethern, die an beiden Enden phenolische OH-Gruppen tragen, und Polykondensaten wie z. B. Polyestern oder Polyamiden. So wird z. B. ein Polyphenylenether-Polyester-Blockcopolymeres durch Veresterung eines difunktionellen Polyphenylenethers und 1,6-Hexandiol mit Adipinsäuredichlorid in trockenem Pyridin hergestellt. Nachteile dieser Methode sind die geringe Reaktionsfähigkeit der phenolischen Endgruppen, der Einsatz von Säurechloriden und die Verwendung von Pyridin.

In der EP-OS 0 248 263 werden Formmassen sowie Verfahren zu ihrer Herstellung beschrieben, die Polyphenylenether-Polyester-Block- oder Propfcopolymere der allgemeinen Formel A-$Z^1$-B enthalten. A ist hierbei ein Polyphenylenether- und B ein Polyesterblock; $Z^1$ ist eine Verknüpfungsgruppe, die sich von einer Vielzahl di- oder polyfunktioneller Verbindungen wie z. B. Trimellitsäureanhydridchlorid, Terephthalsäuredichlorid, Maleinsäurederivaten, Hexamethylendiisocyanat, 1,4-Bis(2-oxazolinyl)benzol oder Glycidylmethacrylat ableitet. Man geht hierbei von einem vorgebildeten, zunächst unfunktionalisierten Polyphenylenether aus und führt die Verknüpfung durch Reaktion an der phenolischen Endgruppe (z. B. Veresterung mit Säurechloriden), an den aromatischen Ringen (elektrophile Substitution mit N-Methylolacetamid und Methansulfonsäure, Beispiel 2) oder an den Alkylgruppen (radikalischer Angriff mit Glycidylmethacrylat, Beispiele 5 - 9) durch. Nachteilig sind:

- die geringe Reaktivität der sterisch gehinderten phenolischen Endgruppe; die Pfropfungsausbeute bezogen auf den Polyphenylenether beträgt durchschnittlich nur ca. 30 %;
- der unspezifische Charakter der Reaktion beim Angriff auf die aromatischen Ringe oder die Alkylgruppen; die Zahl der eingeführten Verknüpfungsgruppen $Z^1$ sowie der Ort der Substitution können nicht im voraus festgelegt werden.
- Bildung eines großen Anteils von Homopolymerisat beim radikalischen Angriff polymerisierbarer funktioneller Verbindungen wie z. B. Glycidylmethacrylat; diese Homopolymeren müssen anschließend in aufwendiger Weise abgetrennt werden.

Ein Spezialfall von Polyphenylenether-Polykondensat-Blockcopolymeren ist in der EP-OS 0 193 741 beschrieben; das Polykondensat, vorzugsweise ein Polyester, besitzt flüssigkristallinen Charakter. Ausgehend von vorgebildeten Polyphenylenethern erfolgt auch hier die Verknüpfung an den phenolischen Endgruppen, z. B. durch Reaktion mit Säurechloriden.

Polyphenylenether-Polyamid-Blockcopolymere werden durch Umsetzung der phenolischen Endgruppen von vorgebildeten, unfunktionalisierten Polyphenylenethern mit di- oder polyfunktionellen Kupplungsreagenzien, die als Promotoren für die anschließende Polymerisation von zugesetztem Lactam wirken, hergestellt (EP-OS 0 211 201; Polym. Bull. 17 (1987), 423). Nachteilig ist auch hier die geringe Reaktivität der phenolischen Endgruppe, die den Einsatz eines hohen Promotorüberschusses oder technisch ungebräuchlicher Reagenzien wie Natriumhydrid erfordert; die Produkte enthalten nur 10 bis 46 Gew.-% Blockcopolymeres. Außerdem ist diese Methode auf Blockcopolymere beschränkt; deren Polyamidsegment sich von Lactamen her leitet.

Polyphenylenether-Polyester-Pfropfcopolymere, bei denen eine Polyphenylenether-Hauptkette mit Polypivalolactonketten in statistischer Verteilung gepfropft ist, sind in der EP-OS 0 243 271 beschrieben.

Das Verfahren erfordert die Metallierung des Polyphenylenethers, gelöst in Tetrahydrofuran, mit metallorganischen Verbindungen wie n-Butyllithium unter peinlichem Ausschluß von Luftsauerstoff, Feuchtigkeit sowie Lösemittelresten, die leicht abstrahierbaren Wasserstoff enthalten, wie z. B. Alkoholen.

Die aus dem Stand der Technik bekannten Polyphenylenether-Polykondensat-Block- bzw. -Propfcopolymere sind also nur durch eine aufwendige Synthese erhältlich, die drei getrennte Schritte beinhaltet:

1. Herstellung eines üblichen, unfunktionalisierten Polyphenylenethers;
2. Funktionalisierung;
3. Polykondensation geeigneter Monomerer in Gegenwart dieses funktionalisierten Polyphenylenethers.

Alternativ kann folgender, ebenfalls mindestens dreistufiger Weg beschritten werden (siehe z. B. EP-OS 0 248 263):

1. Herstellung eines üblichen, unfunktionalisierten Polyphenylenethers;

1*. ggf. dessen Funktionalisierung;

2. Herstellung eines Polyesters;

2*. ggf. dessen Funktionalisierung;

3. Kopplung von Polyphenylenether und Polyester durch Reaktion in Lösung oder in der Schmelze.

Im Normalfall bildet sich ein Gemisch, das große Anteile der entsprechenden Homopolymerisate enthält. Zudem ist die Synthese häufig auf ein bestimmtes Polykondensat beschränkt.

Aufgabe der vorliegenden Erfindung war die Synthese von Polyphenylenether-Polykondensat-Blockcopolymeren unter Vermeidung der oben erwähnten Nachteile.

Es wurde nun ein einfacheres Verfahren zur Herstellung derartiger Blockcopolymerer gefunden. Dieses beinhaltet nur zwei Reaktions schritte, wobei ein Produkt erhalten wird, bei dem die Hauptmenge des Polyphenylenetheranteils, häufig sogar mehr als 90 Gew.-%, an das Polykondensat gebunden ist. Diese Blockcopolymere unterscheiden sich zudem in ihrer Struktur von den aus der Literatur bekannten (siehe unten). Das Verfahren besteht aus folgenden Schritten:

1. man stellt zunächst aus einem geeigneten Monomerengemisch auf dem Wege der oxidativen Kupplung einen Polyphenylenether her, der an einem Kettenende auf übliche Weise eine phenolische Endgruppe, an dem anderen Kettenende eine funktionelle Gruppe trägt;

2. anschließend setzt man diesen funktionalisierten Polyphenylenether mit einem polykondensatbildenden Monomerengemisch um.

Als Monomere für die oxidative Kupplung zu Polyphenylenethern, die am Kettenende eine funktionelle Gruppe tragen, werden nebeneinander Phenole der Formel

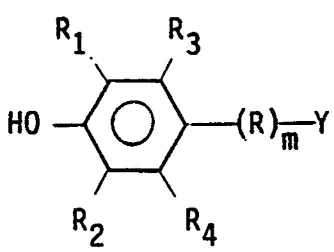

und

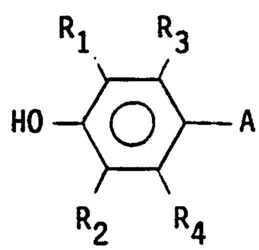

eingesetzt,

I

II

wobei die Substituenten und Parameter folgende Bedeutung haben:

$R_1$, $R_2$ = gegebenenfalls subst. $C_{7-12}$-Benzyl, H oder bevorzugt $C_{1-6}$-Alkyl mit der Einschränkung, daß $R_1$ und $R_2$ nicht gleichzeitig tertiäre Alkylgruppen oder Wasserstoffe sein dürfen;

$R_3$, $R_4$ = $C_{1-6}$-Alkyl oder bevorzugt H;

R = zweiwertiger (cyclo)aliphatischer, arylischer oder benzylischer Rest mit bis zu 20 C-Atomen;

m = 0 oder 1;

Y ist eine funktionelle Gruppe, die sich an einer polykondensatbil denden Reaktion beteiligen kann. Bevorzugt werden die Gruppen $COOR'$ mit R = H, $C_{1-6}$-Alkyl oder -Hydroxyalkyl;

$CONR''R'''$ mit $R''$ und $R'''$ definiert wie $R'$;

2-Oxazolinyl;

$NH_2$;

OH; wobei in den beiden letzten Fällen m nur den Wert 1 annehmen kann;

A = Cl, Br, J oder bevorzugt H.

Selbstverständlich können die Substituenten $R_1$ bis $R_4$ in den Phenolen I und II unabhängig voneinander gewählt werden.

Besonders bevorzugt sind $R_1$ und $R_2$ Methylgruppen sowie $R_3$ und $R_4$ Wasserstoffe.

Die funktionalisierten Phenole der Formel I lassen sich z. B. nach folgenden Methoden herstellen:

1. Carboxylierung des Natrium- oder Kaliumsalzes eines o,o'-Dialkylphenols (W. H. Meck et al., Journal of Chemical and Engineering Data 14, 388 - 391 (1969); die entstandene Carbonsäure kann durch Standardreaktionen in Ester, Amide oder Oxazoline übergeführt werden.

2. Behandlung eines o,o'-Dialkylphenol-Alkylcarbonsäureesters wie z. B. 2,6-Dimethylphenylacetat mit Aluminiumtrichlorid (H. Henecka in "Methoden der organischen Chemie", (Houben-Weyl), Band 7/2a, S. 379 ff., Thieme-Verlag, Stuttgart 1973). Das entstehende p-Acyl-o,o'-dialkylphenol kann mit Schwefel und einem Amin nach Willgeroth-Kindler über eine Carbonsäure in die entsprechenden Ester, Amide usw.

überführt werden.

3. Umsetzung eines Phenols unter saurer oder alkalischer Katalyse mit einer Substanz, die sowohl eine C-C-Doppelbindung bzw. eine unter Carboniumionbildung leicht abspaltbare Gruppe als auch eine funktionelle Gruppe wie COOH, Ester, Amid, Nitril oder ähnliche besitzt. Hier kommen vor allem in Frage:

a) Acrylsäuren bzw. ihre Derivate, z. B. Zimtsäure, Zimtsäureethylester, Isopropylidencyanacrylsäureethylester, Benzylidenmalonsäurediethylester, Acrylnitril.

b) Diels-Alder-Addukte aus ggf. substituierten Butadienen und Alkylencarbonsäure(derivaten). Derartige funktionalisierte Phenole werden z. B. in der EP-OS 0 106 799 beschrieben. Geeignete Diels-Alder-Addukte sind z. B. diejenigen aus Butadien und Acrylsäureethylester, Cyclopentadien und Acrylsäure sowie Isopren und Acrylnitril.

c) Hydroxycarbonsäuren wie z. B. Mandelsäure.

4. Die eingesetzten Phenolamine und Phenolalkohole können auf bekannte Weise folgendermaßen hergestellt werden:

a) Die Reduktion der entsprechenden Carbonsäureester, vorzugsweise auf katalytischem Wege, ergibt die Phenolalkohole.

b) Analog werden durch Reduktion der entsprechenden Amide, Nitrile oder Nitroverbindungen (z. B. aus Aldehyd und Nitromethan) die Phenolamine synthetisiert.

Bei der vorliegenden Erfindung ist im Rahmen der angegebenen Formel die Art des funktionalisierten Phenols und dessen Herstellung unkritisch. Wesentlich ist nur, daß die funktionelle Gruppe unter Polykondensationsbedingungen und die phenolische Gruppe unter den Bedingungen der oxidativen Kupplung reagieren können.

Besonders bevorzugt werden folgende funktionalisierten Phenole eingesetzt:

- 4-Hydroxy-3,5-dimethylbenzoesäure oder deren Derivate (nach Methode 1 aus 2,6-Dimethylphenol und Kohlendioxid)
- (4-Hydroxy-3,5-dimethylphenyl)essigsäure oder deren Derivate (nach Methode 2)
- 3-(4-Hydroxy-3,5-dimethylphenyl)propionsäure oder deren Derivate (nach Methode 3a)
- (4-Hydroxy-3,5-dimethylphenyl)phenylessigsäure oder deren Derivate (nach Methode 3c)
- 3-(4-Hydroxy-3,5-dimethylphenyl)-3-phenylpropionsäure oder deren Derivate (nach Methode 3a aus 2,6-Dimethylphenol und Zimtsäure)
- 2,6-Dimethyl-4-(2-hydroxyethyl)phenol (nach Methode 4a durch Reduktion von 4-Hydroxy-3,5-dimethylphenylessigsäureestern)
- 2,6-Dimethyl-4-(2-aminoethyl)phenol (nach Methode 4b durch Reduktion von z. B. 4-Hydroxy-3,5-dimethylphenylacetonitril)
- 2-(4-Hydroxy-3,5-dimethylphenyl)-2-oxazolin (nach Methode 1)

Geeignete substituierte Phenole der Formel II sind z. B. 2,3,6-Trimethylphenol, 2,6-Dibenzylphenol, 4-Brom-2,6-Dimethylphenol oder bevorzugt 2,6-Dimethylphenol. Es können auch Gemische solcher Phenole verwendet werden.

Üblicherweise führt man die oxidative Kupplung mit einem Gemisch aus 0,2 - 10 Mol-% von Phenolen der allgemeinen Formel I und 90 - 99,8 Mol-% von Phenolen der allgemeinen Formel II durch.

Die oxidative Kupplungsreaktion wird dem Stand der Technik entsprechend in aromatischen Lösemitteln wie z. B. Chlorbenzol, 1,2-Dichlorbenzol, Xylol, Toluol, Benzol, Ethylbenzol, Pyridin oder in Mischungen dieser Lösemittel mit Alkoholen wie z. B. Methanol oder Isopropanol bzw. Ketonen wie z. B. Aceton bzw. Kohlenwasserstoffen wie z. B. Hexan oder Heptan durchgeführt. Sie erfolgt in Gegenwart eines Metallkatalysators und einer Base wie z. B. eines sekundären und/oder tertiären Amins unter Hindurchleiten eines Sauerstoff enthaltenden Gases. Üblicherweise werden Kupfer-Amin- sowie Mangan-Komplexe als Katalysatoren verwendet (siehe US-PSS 3 306 874, 3 306 875; EP-OSS 0 098 929, 0 099 965, 0 122 394, 0 137 139 sowie DE-OSS 34 42 141 und 25 05 328). Die Wahl des Katalysatorsystems ist unkritisch. Nach Erreichen des gewünschten Molekulargewichts wird die Reaktion mit den in der Literatur beschriebenen Methoden abgebrochen und das Polymere auf die übliche Weise isoliert.

Geeignete funktionalisierte Polyphenylenether und ihre Herstellung sind in der DE-Patentanmeldung P 38 13 355.5 sowie in der DE-OS 17 45 201 beschrieben, auf die hiermit Bezug genommen wird.

In der nächsten Stufe werden die funktionalisierten Polyphenylenether mit einem polykondensatbildenden Monomerengemisch umgesetzt.

Als Bestandteil der Blockcopolymeren geeignete Polykondensate enthalten folgende allgemeine Struktureinheiten:

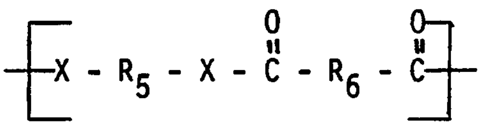 und/oder 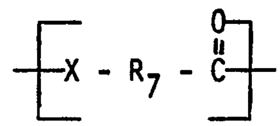

mit folgenden Bedeutungen:
X = O oder NH;
$R_5$ = zweiwertiger aliphatischer oder aromatischer Rest mit 2 bis 22 C-Atomen oder eine Struktur der allgemeinen Formel
$-(R_8-O)_n- R_8-$,
wobei $R_8$ ein zweiwertiger aliphatischer Rest mit 2 bis 4 C-Atomen ist und n einen Wert zwischen 1 und 60 hat;
$R_6$ = zweiwertiger aliphatischer oder aromatischer Rest mit 4 bis 38 C-Atomen;
$R_7$ = zweiwertiger aliphatischer oder aromatischer Rest mit 1 bis 20 C-Atomen.

Typische Beispiele geeigneter Polykondensate sind Polyamide, Polyamidimide, Polyester, Polyesteramide, Polyetheresteramide, Polyetheramide und Polyetherester.

Zur Herstellung dieser Polykondensate werden folgende Monomere verwendet:
- aliphatische oder aromatische Dicarbonsäuren mit 6 - 40 C-Atomen oder deren Derivate wie z. B. Adipinsäure, Trimethyladipinsäure, Korksäure, Azelainsäure, Sebacinsäure, Dodecandisäure, Dimerfettsäure (vorzugsweise hydriert), Isophthalsäure und Terephthalsäure sowie deren Ester.
- aliphatische oder aromatische Tricarbonsäuren mit 6 bis 12 C-Atomen oder deren Anhydride bzw. Ester. Diese Tricarbonsäuren müssen zur Bildung cyclischer Imide befähigt sein, d. h. zwei Carboxylgruppen müssen ortho- bzw. alpha,beta- oder alpha-gammaständig sein. Geeignete Beispiele hierfür sind Succinylessigsäure und Trimellitsäureanhydrid.
- aliphatische oder aromatische Diamine mit 2 - 22 C-Atomen wie z. B. Ethylendiamin, Hexamethylendiamin, Trimethylhexamethylendiamin, Isophorondiamin, Dodecamethylendiamin, Bis-(p-aminocyclohexyl)methan, m-Xylylendiamin und 2,4-Diaminotoluol.
- aliphatische oder aliphatisch/aromatische Aminoalkohole mit 2 -22 C-Atomen wie z. B. Ethanolamin, 1-Amino-2-propanol oder 2-Amino-1-phenylethanol.
- aliphatische Diole mit 2 - 22 C-Atomen wie z. B. Ethylenglykol, 1,4-Butandiol, Neopentylglykol, 1,4-Cyclohexandimethanol, 1,6-Hexandiol, 1,10-Decandiol und 1,12-Dodecandiol.
- Polyetherdiole bzw. Polyetherdiamine der Formel
$HX-(R_8 - O)_n-R_8 - XH$
mit X = O oder NH, wobei $R_8$ ein zweiwertiger aliphatischer Rest mit 2 bis 4 C-Atomen ist und n einen Wert zwischen 1 und 60 hat. Beispiele sind Polyethylenglykol, Polypropylenglykol, Polytetrahydrofurandiol und Polytetrahydrofurandiamin. Bevorzugt wird Polytetrahydrofurandiol mit einem Molekulargewicht $M_n$ zwischen 500 und 4 000 eingesetzt (PTHF 500 bis 4000).
- Lactame und Aminocarbonsäuren mit 2 bis 21 C-Atomen wie z. B. Glycin, Caprolactam, Omega-Aminocapronsäure, Omega-Aminoundecan säure, Omega-Aminododecansäure, Laurinlactam oder 3-Aminobenzoesäure.
- Lactone und Hydroxycarbonsäuren mit 2 bis 21 C-Atomen wie z. B. Glycolsäure, Milchsäure, 4-Hydroxybuttersäure, Pivalolacton oder Caprolacton.

Die Herstellung von Polyamiden ist z. B. in Kirk-Othmer, Encyclopedia of chemical technology, Vol. 18, John Wiley & 50ns 1982, S. 328 - 371 beschrieben, die Herstellung von Polyestern ibid., S. 549 - 574. Geeignete Polyamidimide werden z. B. nach den für Polyamide üblichen Verfahren hergestellt. Polyesteramide werden nach den für Polyamide oder Polyester üblichen Verfahren erhalten. Zur Herstellung von Polyetheresteramiden und Polyetheramiden siehe z. B. Elias/Vohwinkel, "Neue polymere Werkstoffe für die industrielle Anwendung", 2. Folge, Hanser, München 1983, S. 125 - 134 sowie die dort zitierte Literatur; zu Polyetherestern siehe ibid., S. 121 -124.

Die erfindungsgemäßen Blockcopolymere werden durch Polykondensation der oben angegebenen Monomeren in Gegenwart der endgruppenhaltigen Polyphenylenether synthetisiert. Diese Polykondensation kann in Lösung oder vorzugsweise in der Schmelze durchgeführt werden. Die Polykondensatblöcke besitzen Molekulargewichte im Bereich von $M_n$ = 1 000 - 50 000, bevorzugt 1 500 - 20 000; die Einstellung des Molekulargewichts erfolgt mindestens teilweise durch die endgruppenhaltigen Polyphenylenether, darüber hinaus durch einen regelnden Überschuß eines der difunktionellen polykondensatbildenden Monomeren. In einer weniger bevorzugten Ausführungsform wird ein monofunktioneller Regler wie z. B. Stearylamin oder Benzoesäure mit eingesetzt. Die endgruppenhaltigen Polyphenylenether besitzen Moleku-

largewichte $M_n$ von ca. 1 200 bis 60 000; der Wert von $M_n$ wird durch den eingesetzten Anteil an funktionalisiertem Phenol bestimmt.

Die erfindungsgemäßen Polyphenylenether-Polykondensat-Blockcopoly mere unterscheiden sich vom Stand der Technik also durch

- sehr weitgehende Verknüpfung des Polyphenylenethers;
- ein neuartiges Verknüpfungsprinzip (Anbindung nicht am Kopf, sondern am Schwanz der Polyphenylenetherkette);
- Terminierung der Polyphenylenetherblöcke durch phenolische Endgruppen.

Die erfindungsgemäßen Blockcopolymere können unmittelbar oder als Zusatz für Formmassen zur Herstellung z. B. von Kunststofformkörpern oder Folien verwendet werden.

Die Bestimmung der Viskositätszahl J der erfindungsgemäßen Blockcopolymere erfolgt nach DIN 53 728 in Chloroform in $cm^3/g$ (Konzentration: 5 g/l).

Beispiele:

Zur Herstellung der Blockcopolymeren wurden Polyphenylenether (PPE) mit folgenden funktionellen Endgruppen eingesetzt:

| | Hergestellt aus [Mol-%] | |
|---|---|---|
| | 2,6-Dimethyl-phenol | funktional. Phenol |
| 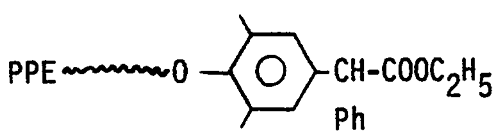 | | |
| A J = 11 $cm^3/g$ | 92 | 8 |
| B J = 39 $cm^3/g$ | 99 | 1 |
| 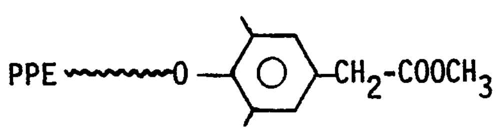 | | |
| C J = 17 $cm^3/g$ | 96 | 4 |

| | Hergestellt aus [Mol-%] | |
|---|---|---|
| | 2,6-Dimethyl-phenol | funktional. Phenol |
| 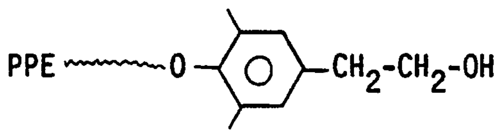 | | |
| D J = 33 $cm^3/g$ | 99 | 1 |
| 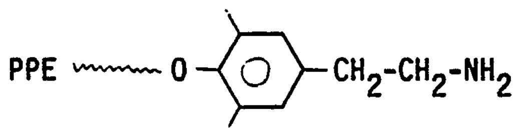 | | |
| E J = 21 $cm^3/g$ | 98 | 2 |

Beispiel 1.1

32,3 g PPE A sowie 11,4 g Dodecandisäure und 63 g PTHF 1000 werden unter Stickstoff zusammen mit 15 g Butandiol und 0,3 g Titantetraisopropanolatlösung (10 Gew.-% in Isopropanol) innerhalb von 3 Stunden auf 220 - 240 °C erhitzt. Die Polykondensation wird innerhalb von 4 Stunden im Ölpumpenvakuum bei 240 °C durchgeführt.

Das Produkt wird zur Reinigung in heißem Toluol gelöst, mit Methanol gefällt und anschließend mit Isopropanol ausgekocht. Die Trocknung erfolgt bei 100 °C im Ölpumpenvakuum.
J = 30 $cm^3/g$.
GPC-Untersuchen zeigen, daß eine monomodale Verteilung vorliegt.

Beispiel 1.2

Analog Beispiel 1.1 wird eine Mischung aus 51 g PPE B, 2,6 g Terephthalsäure, 9 g 1,4-Butandiol und 0,1 g 10 %ige Titanisopropanolatlösung erhitzt. Die Durchführung der Polykondensation erfolgt innerhalb von 2 Stunden im Ölpumpenvakuum bei anfangs 250 °C unter langsamem Hochheizen auf 270 °C.
J = 47 $cm^3/g$ (nicht klar löslich).

Beispiel 1.3

46 g PPE C, 25,0 g Empol[R] 1010 (Dimerfettsäure der Firma USI Chemical B. V., Breda, NL), 6,2 g Hexamethylendiamin sowie 0,2 g 85 %ige Phosphorsäure werden unter Stickstoff auf 200 °C erhitzt. Innerhalb von 3 Stunden wird die Temperatur auf 270 °C angehoben, Ölpumpenvakuum angelegt und die Polykondensation nach weiteren 4 Stunden beendet.
J = 31 $cm^3/g$.

Beispiel 1.4

Analog Beispiel 1.1 wird eine Mischung aus 61,5 g PPE D, 9,4 g Dodecandisäure, 23,6 g PTHF 650, 25 g Butandiol und 0,2 g 10 %ige Titantetraisopropanolatlösung polykondensiert. Die Gesamtpolykondensationszeit beträgt 9 Stunden.
J = 43 $cm^3/g$.

Beispiel 1.5

Analog Beispiel 1.3 wird eine Mischung aus 73,4 g PPE E, 14,5 g Adipinsäure, 16,9 g Isophorondiamin sowie 5,3 g Stearylamin und 0,2 g 85 %ige Phosphorsäure als Katalysator innerhalb von 8 Stunden polykondensiert.
J = 24 $cm^3/g$.

Im GPC-Spektrum ist eine trimodale Verteilung zu erkennen, die auf das Vorliegen folgender Spezies hinweist:
- geringe Mengen von niedermolekularem Polyamid-Homopolymeren;
- Diblock PPE-Polyamid als Hauptprodukt;
- höhermolekularer Anteil, der PPE-Polyamid-PPE-Triblockcopolymeren zuzuordnen ist.

Aus dem Löslichkeitsverhalten, dem J-Wert-Aufbau und den GPC-Untersuchungen ist in allen Fällen eine sehr weitgehende Bildung von Blockcopolymeren ersichtlich.

## Ansprüche

1. Verfahren zur Herstellung von Polyphenylenether-Polykondensat-Blockcopolymeren, dadurch gekennzeichnet, daß man

A. aus einem Monomerengemisch von
a) 0,2 - 10 Mol-% von Phenolen der allgemeinen Formel I und
b) 99,8 - 90,0 Mol-% von Phenolen der allgemeinen Formel II

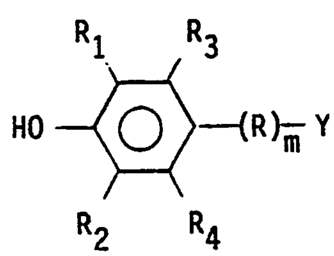
I

und

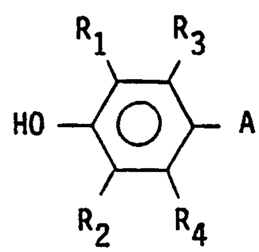
II

zunächst durch oxidative Kupplung einen funktionalisierten Polyphenylenether herstellt, wobei die Substituenten und Parameter folgende Bedeutung haben:
$R_1$, $R_2$ = gegebenenfalls subst. $C_{7-12}$-Benzyl, H oder bevorzugt $C_{1-6}$-Alkyl
mit der Einschränkung, daß $R_1$ und $R_2$ nicht gleichzeitig tertiäre Alkylgruppen oder Wasserstoffe sein dürfen;
$R_3$, $R_4$ = $C_{1-6}$-Alkyl oder bevorzugt H;
R = zweiwertiger (cyclo)aliphatischer, arylischer oder benzylischer Rest mit bis zu 20 C-Atomen;
m = 0 oder 1;
Y ist eine funktionelle Gruppe, die sich an einer polykondensatbildenden Reaktion beteiligen kann;
A = Cl, Br, J oder bevorzugt H;

B. anschließend in Gegenwart dieses funktionalisierten Polyphenylenethers eine Polykondensation geeigneter Monomerer zu einem Polykondensat durchführt, das Einheiten der Formel

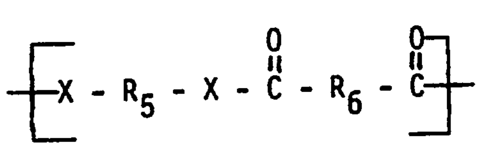
und/oder
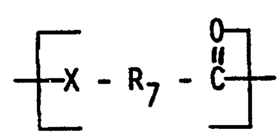

mit folgenden Bedeutungen enthält:
X = O oder NH;
$R_5$ = zweiwertiger aliphatischer oder aromatischer Rest mit 2 bis 22 C-Atomen oder eine Struktur der allgemeinen Formel
$-(R_8-O)_n- R_8-$,
wobei $R_8$ ein zweiwertiger aliphatischer Rest mit 2 bis 4 C-Atomen ist und n einen Wert zwischen 1 und 60 hat;
$R_6$ = zweiwertiger aliphatischer oder aromatischer Rest mit 4 bis 38 C-Atomen;
$R_7$ = zweiwertiger aliphatischer oder aromatischer Rest mit 1 bis 20 C-Atomen.

2. Verfahren gemäß Anspruch 1,
dadurch gekennzeichnet,
daß Y folgende Bedeutungen haben kann:
$COOR'$ mit $R'$ = H, $C_{1-6}$-Alkyl oder -Hydroxyalkyl;
$CONR''R'''$ mit $R''$ und $R'''$ wie $R'$;
2-Oxazolinyl.

3. Verfahren gemäß Anspruch 1,
dadurch gekennzeichnet,
daß m = 1 und Y = OH oder $NH_2$ ist.

4. Verfahren gemäß den Ansprüchen 1 bis 3,
dadurch gekennzeichnet,
daß $R_1$ und $R_2$ Methylgruppen sowie $R_3$ und $R_4$ Wasserstoffe sind.

5. Verfahren gemäß den Ansprüchen 1 bis 4,
dadurch gekennzeichnet,
daß das Polykondensat ein Polyester ist.

6. Verfahren gemäß den Ansprüchen 1 bis 4,
dadurch gekennzeichnet,
daß das Polykondensat ein Polyamid ist.

7. Verfahren gemäß den Ansprüchen 1 bis 6,
dadurch gekennzeichnet,
daß die Polykondensatblöcke ein Molekulargewicht $M_n$ von 1 000 bis 50 000, vorzugsweise 1 500 bis 20 000 besitzen.

8. Polyphenylenether-Polykondensat-Blockcopolymere, hergestellt nach einem Verfahren gemäß den Ansprüchen 1 bis 7.

9. Formmassen, die Blockcopolymere gemäß dem Anspruch 8 enthalten.